(19) Europäisches Patentamt
European Patent Office
Office européen des brevets

(11) **EP 3 418 720 A1**

(12) **EUROPEAN PATENT APPLICATION**

(43) Date of publication:
**26.12.2018 Bulletin 2018/52**

(51) Int Cl.:
***G01N 15/14*** (2006.01)

(21) Application number: **17176931.8**

(22) Date of filing: **20.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Koninklijke Philips N.V.**
**5656 AE Eindhoven (NL)**

(72) Inventors:
• **SHI, Jun**
 **5656 AE Eindhoven (NL)**
• **CHEN, Weizhong**
 **5656 AE Eindhoven (NL)**
• **ZHANG, Peng**
 **5656 AE Eindhoven (NL)**

(74) Representative: **de Haan, Poul Erik et al**
 **Philips International B.V.**
 **Philips Intellectual Property & Standards**
 **High Tech Campus 5**
 **5656 AE Eindhoven (NL)**

(54) **PARTICULATE MATTER SENSING**

(57)     A particle sensor device (100) for determining an ambient particle concentration in an air flow through the particle sensor device is disclosed. The particle sensor device comprises an air flow channel (110) extending between a first opening (111) open to an ambient environment including the ambient particle concentration and a second opening (113) open to said ambient environment, the air flow channel comprising a sensing area (115) including a particle sensor (120); and a processor (130) coupled to the particle sensor and configured to derive the ambient particle concentration from a first signal received from the particle sensor, said first signal being indicative of a first particle count in a wind-induced air flow through the air flow channel when the particle sensor device is stationary; and a further signal received from the particle sensor, said at least one further signal being indicative of a further particle count in an air flow through the air flow channel induced by a shaking motion of the particle sensor device to eliminate the influence of wind on the air flow through the air flow channel. Also disclosed are an electronic device comprising such a particle sensor device and a method for determining an ambient particle concentration with such a particle sensor device.

**FIG. 1**

**Description**

FIELD OF THE INVENTION

The present invention relates to a particle sensor device for determining an ambient particle concentration in an air flow through the particle sensor device, the particle sensor device comprising an air flow channel extending between a first opening open to an ambient environment including the ambient particle concentration and a second opening open to said ambient environment, the air flow channel comprising a sensing area including a particle sensor; and a processor coupled to the particle sensor and configured to derive the ambient particle concentration.

The present invention further relates to an electronic device comprising such a particle sensor device.

The present invention still further relates to a method of determining an ambient particle concentration with such a particle sensor device.

BACKGROUND OF THE INVENTION

With increasing concerns over the adverse health effects of air pollution e.g. PM2.5 (particles smaller than 2.5 $\mu$m diameter range) on human health, the demand for pollution information of living spaces is continuously increasing. For example, in some developing countries such as China and India, severe PM2.5 pollution has become a common problem over the last decade. This has caused people to become increasingly interested in obtaining environmental pollution levels, which interest has led to an increased interest in particle sensor devices, e.g. particle sensor devices integrated in consumer electronic devices such as smart phones or other smart devices.

Most particle sensor devices use a light scattering principle to measure the particle concentration. Light scattering can be induced when particles go through a sensing area of the particle sensor device, where the scattered light is detected and transformed into electrical signals, which may be amplified and processed. The number and diameter of particles can be obtained by analysis of such electrical signals due to the fact that the number of the signals can be correlated to the number of the particles in the sensing area, with the signal waveform containing information regarding the particle's diameter.

Different types of light scattering based sensor are known. One known principle is a LED based sensor as for example disclosed in JP2008145353A and CN104089858A. Another known principle is a laser-based sensor, for example, a laser-based PM2.5 detector used to detect atmospheric particles having a size (diameter) of less than 2.5 $\mu$m, as for example disclosed in CN203551443U, CN203824872U and CN105021501A. The basic principle of such a laser-based PM2.5 detector is that the laser scattering by the particles may be detected with an optical sensor arranged to produce a pulse signal output, which may be converted into a digital signal.

The air flow through such a sensor is typically generated by a resistor, fan, pump or the like. In this manner, the air flow speed through the particle sensor device can be accurately controlled, as required for an accurate determination of the particle concentration per unit volume of air. However, such components are relatively costly, which creates undesired upward pressure on the manufacturing cost of such particle sensor devices, in particular where such particle sensor devices are to be deployed in a competitive, small margin, technical field, e.g. electronic devices such as consumer electronic devices. Moreover, such components increase the size of the particle sensor device as well as increase the power consumption of the particle sensor device, which may be undesirable in certain application domains, e.g. wearable devices. In addition, such components generate heat when in use, which may cause temperature fluctuations and associated measurement error in the particle sensor device.

US 2016/0025628 A1 discloses a mobile device which senses particulate matter. The mobile device includes a housing having an air flow path through which air flows when the mobile device is shaken; an inertia sensor that detects acceleration of the mobile device; a light-scattering type sensor that irradiates the air flow path with light and detects particulate matter in air flowing through the air flow path; and a controller that includes a counter for counting the particulate matter detected by the light-scattering type sensor, and a flow rate calculator for detecting an air flow rate of the air flow path based on a detection signal of the inertia sensor. In this manner, an air flow generating component can be avoided. However, it has been found that such an arrangement can provide inaccurate particulate matter measurements, especially on windy days.

SUMMARY OF THE INVENTION

The present invention seeks to provide a particle sensor device for accurately determining an ambient particle concentration in an air flow through the particle sensor device on windy days.

The present invention further relates to an electronic device comprising such a particle sensor device.

The present invention still further relates to a method of accurately determining an ambient particle concentration with such a particle sensor device.

According to an aspect, there is provided a particle sensor device for determining an ambient particle concentration in an air flow through the particle sensor device, the particle sensor device comprising an air flow channel extending between a first opening open to an ambient environment including the ambient particle concentration and a second opening open to said ambient environment, the air flow channel comprising a sensing area including a particle sensor; and a processor coupled to the particle sensor and configured to derive the ambient particle concentration from a first signal received from the particle sensor, said first signal being indicative of a first particle count in a wind-induced air flow through the air flow channel when the particle sensor device is stationary; and a further signal received from the particle sensor, said at least one further signal being indicative of a further particle count in an air flow through the air flow channel induced by a shaking motion of the particle sensor device.

The present invention is based on the insight that wind can influence the air flow speed through the air flow channel of such a particle sensor device, such that in relatively high winds the actual flow speed can significantly deviate from the expected air flow speed resulting from a motion, e.g. a defined shaking motion, of the particle sensor device, which causes inaccuracies in the particulate matter concentration determined with the processor of such a particle sensor device. This is because typically a volume of ambient air flowing through the air flow channel during the measurement period of the particulate matter measurement is derived from the air flow speed in order to translate a particulate matter count of the particle sensor during the measurement period into a concentration of the particulate matter in the ambient air. Consequently, when the actual air flow speed through the air flow channel deviates from the expected air flow speed, an inaccurate ambient air volume is obtained, thus leading to an inaccurate ambient particulate matter concentration being derived from the ambient particulate matter count obtained with the particle sensor.

This problem is addressed by the particle sensor device being configured to derive the ambient particulate matter concentration from a two-point measurement including a measurement in which the device is to be kept stationary in a general direction of the wind such that a particulate matter concentration in the ambient air can be derived from an air flow through the air flow channel induced by the wind alone, which measurement can be used to correct the other measurement of the two-point measurement in which the particle sensor device is to be shaken by a user in order to induce an air flow through the air flow channel. To this end, the processor preferably is configured to process the first signal and the further signal to eliminate a wind-induced contribution to the further particle count.

In an embodiment, the processor is configured to derive a wind speed from the first signal and to eliminate the wind-induced contribution to the further particle count only if said derived wind speed exceeds a pre-defined threshold. This has the advantage that a calculation of the ambient particle concentration is only based on the two-point measurement when there is a clear indication that the wind significantly contributes to the air flow through the air flow channel, such that for negligible wind speeds a simpler algorithm for calculating the ambient particle concentration can be used, which for example may be beneficial in terms of extending battery life in case of a battery-powered particle sensor device.

The particle sensor may be any suitable design, although preferably the particle sensor comprises an optical module for emitting light through the sensing area and a detector for detecting light scattered by particles in the air flow, and wherein the processor is coupled to the detector as such a particle sensor can accurately determine a particle count in the air flow channel in an energy-efficient manner.

In an embodiment, the particle sensor device further comprises an inertia sensor for determining a speed of the particle sensor device induced by said shaking motion, wherein the processor is configured to derive the ambient particle concentration from the first signal, the further signal and the determined speed. In this manner, the air flow speed through the air flow channel can be accurately determined.

Alternatively, the shaking motion is a predefined motion, wherein the processor is configured to derive the ambient particle concentration from the first signal, the further signal and a predefined particle sensor device speed associated with said predefined shaking motion. This obviates the need for an inertia sensor as the predefined shaking motion if correctly executed by the user of the particle sensor device leads to a predefined air flow speed through the air flow channel of the particle sensor device.

In order to assist such a user in performing the predefined shaking motion correctly, the particle sensor device may further comprise an output device responsive to the processor, wherein the processor is adapted to provide user instructions on the output device for instructing a user to move the particle sensor device in accordance with the predefined movement.

In at least some embodiments, the particle sensor device is a wearable device such that a user can obtain ambient particle sensor concentrations whilst on the go, e.g. when exercising or the like, which for example may provide the user with invaluable insights as to different levels of exposure to particular matter in different regions of an area in which the user was exercising.

Alternatively, in accordance with another aspect of the present invention, there is provided an electronic device comprising the particle sensor device of any of the herein described embodiments. Such an electronic device may be any portable electronic device such that the user can shake the electronic device in order to induce the air flow through the air flow channel of the particle sensor device incorporated within the electronic device. For example, the electronic device may be a mobile phone (smart phone), a tablet computer, a personal digital assistant, a wearable smart device such as a smart watch, and so on. Alternatively, the particle sensor device may be communicatively coupled to such an electronic device such that the electronic device can display or otherwise output the determined ambient particle concentration to the user, thereby obviating the need to provide the particle sensor device itself with such output functionality.

According to yet another aspect, there is provided a method of determining an ambient particle concentration with a particle sensor device according to any of the herein described embodiments, the method comprising generating a wind-induced air flow through the air flow channel with the particle sensor device in a stationary orientation; generating a first signal indicative of a first particle count in said wind-induced air flow with the particle sensor; generating a further air flow through the air flow channel by shaking the particle sensor device; generating at least one further signal indicative of a further particle count in said further air flow with the particle sensor; and processing the first signal and the further signal with the processor to determine the ambient particle concentration in the ambient environment.

As previously explained, in this manner the influence of the wind on the air flow speed through the air flow channel of the particle sensor device can be taken into account. In this respect, processing the first signal and the further signal with the processor to determine the ambient particle concentration in the ambient environment preferably comprises processing the first signal and the further signal to eliminate a wind-induced contribution to the further particle count.

The method may further comprise deriving a wind speed from the processed first signal and eliminating the wind-induced contribution to the further particle count only if said derived wind speed exceeds a defined threshold such that unnecessary factoring in of the wind speed in the determination of the ambient particle concentration can be avoided, e.g. when the wind speed is negligible, thereby improving the efficiency of the method.

In an embodiment, generating the wind-induced air flow through the air flow channel with the particle sensor device in a stationary orientation comprises positioning the air flow channel in a general direction of the wind; and generating the further air flow through the air flow channel by shaking the particle sensor device comprises shaking the particle sensor device such that the air flow channel is oriented perpendicularly to said general direction during at least part of said shaking motion. It has been found that by performing the two-point measurement in this manner, the influence of the wind speed on the air flow speed through the air flow channel can be accurately taken into account.

In an embodiment in which the particle sensor device further comprises an inertia sensor for determining a speed of the particle sensor device induced by said shaking motion, processing the first signal and the further signal with the processor to determine the ambient particle concentration comprises deriving the ambient particle concentration from the first signal, the further signal and the determined speed. This leads to a particularly accurate determination of the air flow speed through the air flow channel during shaking of the particle sensor device.

Alternatively, the shaking motion may be a predefined motion, in which case processing the first signal and the further signal with the processor to determine the ambient particle concentration may comprise deriving the ambient particle concentration from the first signal, the further signal and a predefined particle sensor device speed associated with said predefined shaking motion. This obviates the need to process a sensor signal provided by an inertia sensor to determine the air flow speed induced by the shaking of the particle sensor device, which simplifies the method.

BRIEF DESCRIPTION OF THE DRAWINGS

Embodiments of the invention are described in more detail and by way of non-limiting examples with reference to the accompanying drawings, wherein:

Fig. 1 schematically depicts a particle sensing device according to an embodiment;
Fig. 2 schematically depicts a particle sensing device according to another embodiment;
Fig. 3 schematically depicts an operating principle of such a particle sensing device;
Fig. 4 is a flow chart of a method of determining an ambient particulate matter concentration according to an embodiment;
Fig. 5 is a graph depicting a measurement performance of a particle sensing device according to an embodiment; and
Fig. 6 schematically depicts an electronic device according to an example embodiment.

DETAILED DESCRIPTION OF THE EMBODIMENTS

It should be understood that the Figures are merely schematic and are not drawn to scale. It should also be understood that the same reference numerals are used throughout the Figures to indicate the same or similar parts.

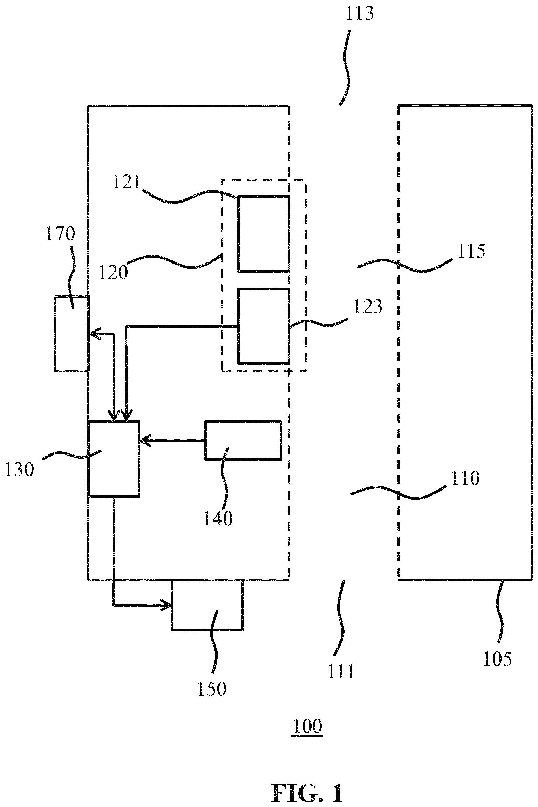

Fig. 1 schematically depicts a particle sensor device 100 according to an embodiment. The particle sensor device 100 comprises an air flow channel 110 extending through a housing 105 of the particle sensor device 100. The housing 105 may be made of any suitable material, e.g. a plastics material, a metal, a metal alloy or combinations thereof. The air flow channel 110 has a first opening 111 and a second opening 113 that are each open to an ambient environment. For example, the first opening 111 may oppose the second opening 113.

In the flow channel 110 in between the first opening 111 and a second opening 113 is located a sensing area 115 housing a particle sensor 120 for detecting particles flowing through the air flow channel 110. Such a particle sensor 120 for example may be a PM2.5 sensor although other particle sensors, e.g. sensors adapted to (also) detect other sized particles such as ultrafine particles (UFP), PM5.0 or PM10.0 particles, may also be considered. In an embodiment, the particle sensor 120 is an optical particle sensor comprising an optical module 121 for emitting light through the sensing area and a detector 123 for detecting light scattered by particles in the air flowing through the sensing area 115. The optical module 121 for example may be a LED module or a laser module and the detector 123 for example may be a photodetector such as a photodiode or the like. Any suitable optical particle sensor design may be used. As such optical particle sensors are well-known per se, this will not be described in further detail for the sake of brevity only.

The particle sensor device 100 further comprises a processor 130 coupled to the detector 123. The processor 130 is arranged to derive a particle concentration in the air flow through the air flow channel 110 from one or more signals received from the detector 123 using a mathematical model associated with the defined movement. As will be explained in more detail below, the mathematical model does not include air flow speed as a parameter. Although air flow speed must be approximately known in determining a particle concentration in an air flow through the air flow channel 110 because the air flow speed determines the volume of air passing through the air flow channel 110 per unit time, embodiments of the present invention are based on the insight that by instructing a user of the particle sensor device 100 to move the device in a defined manner, an air flow speed associated with the defined movement may be assumed. In other words, a given defined movement, if executed correctly, corresponds to a certain air flow speed, and the mathematical model implemented by the processor 130 may be valid for a narrow range of air flow speeds including the flow speed associated with the defined movement. The size of this range may be chosen based on what error margins in the determined particle concentration are considered acceptable; e.g. for an error margin of 20%, the end points of the range may be defined 20% less and 20% more than the flow speed associated with the defined movement respectively.

The mathematical model may be derived in any suitable manner. For example, the mathematical model may be an empirical model derived from measurements with a calibrated particle sensor such as a. Grimm sensor. For example, the mathematical model may be a linear formula represented by: $y=kx+b$ where $k$ and $b$ can be determined by the manufacturer of the device 100 and pre-stored in the device 100 before it is sold to the market. According to another embodiment, the mathematical model may also be a non-linear formula depending on a different air flow channel design. The mathematical model may be stored in a memory 140 accessible to the processor 130. Any suitable memory device, e.g. a RAM, ROM, EEPROM, Flash memory device or the like, may be used for this purpose.

The memory 140 may be separate to the processor 130, in which case the processor 130 may be communicatively coupled to the memory 140, e.g. via a P2P connection, a bus or the like, or alternatively the memory 140 may form part of the processor 130. The memory 140 may store a single mathematical model or may alternatively store a plurality of mathematical models each associated with a different defined movement, e.g. different defined movements associated with different movement speeds, in which case a user may be able to select an appropriate mathematical model in accordance with a defined movement user is about to apply to the particle sensor device 100. For example, in case of a wearable particle sensor device 100, the user may wear the particle sensor device 100 during walking or running, which respective activities typically are associated with different air flow speeds through the air flow channel 100, such that the user may need to select the appropriate mathematical model to be applied by the processor 130 for the corresponding activity. To this end, the particle sensor device 100 may further comprise a user interface 170, e.g. a touchscreen arrangement, a button arrangement, a switch arrangement, a dial arrangement, a combination of such arrangements, and so on, with the processor 130 being responsive to the user interface 170.

In an embodiment, the particle sensor device 100 may further comprise an output device 150 responsive to the processor 130, e.g. a display, loudspeaker, a light source or the like. The processor 130 is adapted to provide user instructions on the output device 150 for instructing a user to move the particle sensor device 100 in accordance with the defined movement. For example, the user may be provided with pictorial, written or spoken instructions through the output device 150 or alternatively the output device 150 may generate a moving or oscillating light beam, for example to indicate a speed at which the particle sensor device 100 should be moved by the user in accordance with the defined movement, e.g. how fast the user should shake the particle sensor device 100 in case of the defined movement being a shaking movement. The output device 150 may be separate to the user interface 170 or alternatively may form part of the user interface 170.

In an embodiment, the particle sensor device 100 is a wearable sensor device. For example, the particle sensor device 100 may be attached to a strap for wearing the particle sensor device on a body part such as an arm or a leg or may be attached to a chain such as a necklace, armband or the like, by way of non-limiting example. In such embodiments, the particle sensor device 100 may further comprise a near-field communication module or wireless communication module (not shown) communicatively coupled to the processor 130 such that the particle sensor device 100 can communicate the determined particle sensor concentrations to a further device, e.g. an electronic device such as a wearable electronic device, a smart electronic device such as a smart phone, tablet computer, laptop computer, personal computer, and so on.

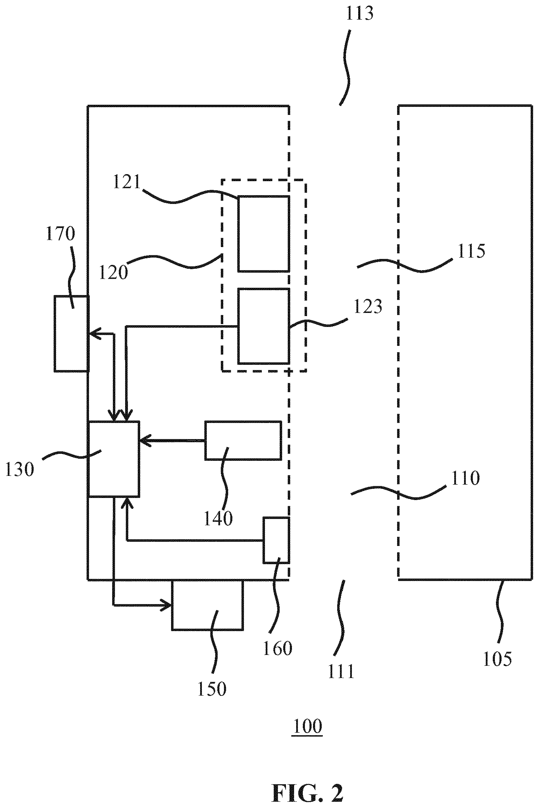

It is not necessarily the case that the air flow speed through the air flow channel 110 is determined based on a defined movement of the particle sensor device 100. Fig. 2 schematically depicts a particle sensor device 100 according to another embodiment in which the particle sensor device 100 may comprise any of the features or combinations thereof previously described with the aid of Fig. 1, and further comprises an inertia sensor 160 such as an accelerometer or the like coupled to the processor 130. In this embodiment, the processor 130 is further adapted to detect an air flow speed of an air flow through the air flow channel 110 of the particle sensor device 100 based on an acceleration of the particle sensor device 100 measured with the inertia sensor 160 during the shaking of the particle sensor device 100, for instance as explained in US 2016/0025628 A1.

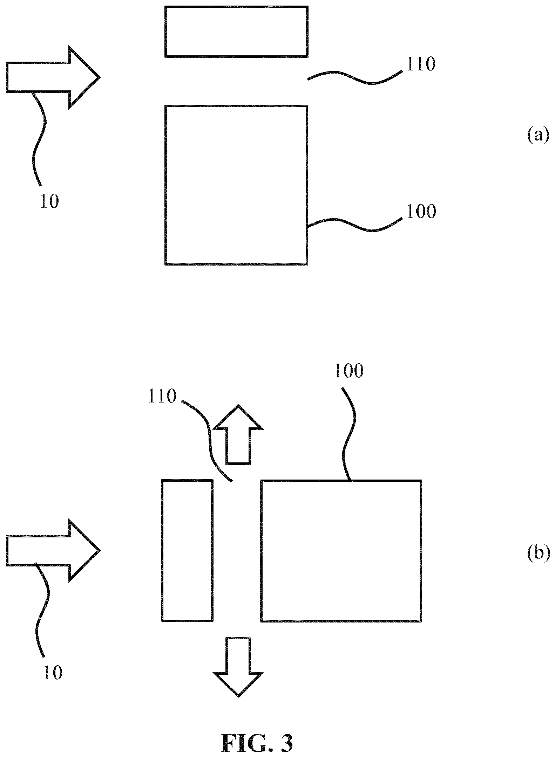

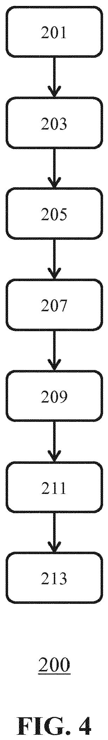

In the particle sensor device 100 according to the various embodiments of the present invention, the processor 130 is adapted to determine the ambient particle

concentration based on a two-point measurement as will be explained in more detail with the aid of Fig. 3, which schematically depicts the orientation (a) of the particle sensor device 100 in the first of these measurements and the orientation (b) of the particle sensor device 100 in the second of these measurements as well as with the aid of Fig. 4, which is a flowchart of a method 200 of determining an ambient particle concentration with the particle sensor device 100.

The two-point measurement has the purpose of eliminating a contribution of atmospheric (ambient) wind 10 blowing through the air flow channel 110 during the shaking of the particle sensor device 100 to generate an ambient air flow at a certain speed through the air flow channel 110 in order to detect a particulate matter concentration in the ambient air. As previously explained, this can interfere with the accurate determination of the volume of air displaced through the air flow channel 110 during the shaking motion, as part of this displaced volume is not induced by the shaking motion, i.e. by the speed at which the particle sensor device 100 is being shaken by its user, but instead is caused by the ambient wind conditions.

The method 200 starts in operation 201, e.g. by switching on the pressure sensor device 100, after which the method 200 proceeds to operation 203 in which the first measurement of the two-point measurement is performed by a user of the particle sensor device 100. In this first measurement, a wind-induced air flow is generated through the air flow channel 110 with the particle sensor device 100 in a stationary orientation. Preferably, the user holds the particle sensor device 100 in an orientation such that the air flow channel 110 generally is aligned with the wind direction of the ambient wind 10. To this end, the user may be provided with user instructions on the output device 150 in order to ensure that the user holds the particle sensor device 100 in the appropriate orientation. In operation 205, the particle sensor 120 generates a first signal indicative of a first particle count in said wind-induced air flow through the air flow channel 110. As will be readily understood by the skilled person, the first particle count may be related to the volume of air passing through the air flow channel 110 during the first measurement as induced by the ambient wind 10.

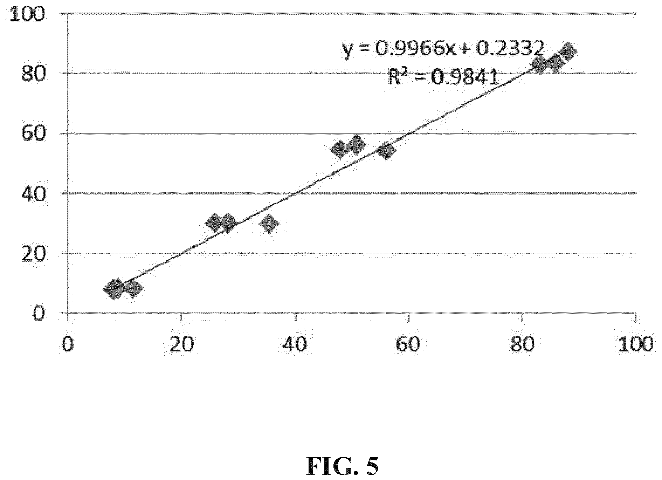

Specifically, the ambient particle concentration $PM_1$ associated with the first measurement may be expressed by the following function: $PM_1 = f(N_1, T_1, V_w)$ in which N1 is the particle count provided by the particle sensor 120 during the first measurement, T1 is the duration of the first measurement and $V_w$ is the wind speed. After performing a number of such measurements under different wind conditions and relating the particle count N1 obtained during these measurements with ambient particle concentrations obtained with a calibrated professional particulate matter sensor (a Grimm meter), it was found that this function could be expressed as follows: $PM_1 = (aV_w+b)N_1/T_1+c$, in which a, b and c are fitting constants. However, it should be understood that such a function may be expressed in a different form, for example dependent of the design (dimensions) of the particle sensor device. Fig. 5 depicts a graph of the outcome of this fitting procedure, in which the solid line depicts the particulate matter concentration curve (PM 2.5 particulate matter) obtained with the Grimm meter and the squares depict the particulate matter concentrations derived from the respective first measurements at different wind speeds. An excellent correlation of $R^2 = 0.9841$ was found between the readings with the professional sensor and the readings obtained with the particle sensor device 100 according to embodiment of the present invention in a stationary position, thus demonstrating the accuracy of the obtained values of $PM_1$ using the above formula.

The method 200 subsequently proceeds to operation 207 in which the user shakes the particle sensor device 100 in order to generate an air flow through the air flow channel 110. As previously explained, where the particle sensor device 100 does not include the inertia sensor 160, the user may be required to shake the particle sensor device 100 in accordance with a predefined shaking motion to ensure that the air flow speed through the air flow channel 110 matches or at least approximates a predefined air flow speed associated with the predefined shaking motion. The user may be provided with user instructions for how to shake the particle sensor device 100 on the output device 150. Preferably, during the shaking of the particle sensor device 100 as indicated by the block arrows in orientation (b) of Fig. 3, the air flow channel 110 generally is initially oriented substantially perpendicularly to the wind direction of the ambient wind 10. However, as during the shaking the orientation of the particle sensor device 100 relative to the direction of the ambient wind 10 changes, the air flow speed V through the air flow channel 110 is a function g of the air flow speed $V_s$ generated by the shaking motion and the air flow speed $V_w$ generated by the wind 10: $V = g(V_w, V_s) = AV_w+BV_s$, in which A and B are scaling factors.

In operation 209, the particle sensor 120 generates a further signal indicative of a further particle count $N_2$ through the air flow channel 110 resulting from the shaking of the particle sensor device 100 during the second measurement. The ambient particle concentration $PM_2$ associated with the second measurement may be expressed as follows: $PM_2 = (AV_w+BV_s+C)N_2/T_2+D$ in which $T_2$ is the duration of the second measurement and C and D are scaling factors or coefficients. This yields the following functions for the first (1) and second (2) measurements respectively:

$$PM_1 = (aV_w+b)N_1/T_1+c \qquad\qquad (1)$$

$$PM_2 = (AV_w+BV_s+C)N_2/T_2+D \qquad\qquad (2)$$

However, as the first and second measurements are typically performed immediately after each other, it can be assumed that the ambient particle concentration does not significantly change, i.e. stays the same, during the first and second measurements, i.e. $PM_1 = PM_2$. Consequently, the influence of the ambient wind 10 can be eliminated when combining functions (1) and (2):

$$PM = \frac{[(BV_s + C')\frac{N_2}{T_2} + D]}{1 - A'\frac{T_1}{N_1} \cdot \frac{N_2}{T_2}} \qquad\qquad (3)$$

During the first (stationary) measurement, $T_1$ and $N_1$ are determined whilst during the second (shaking) measurement $T_2$, $N_2$ and $V_s$ are determined. It is noted that the coefficients or scaling factors in the above formulae may be achieved in any suitable manner, e.g. through calibration experiments using a professional particulate matter sensor to provide calibration values of the particle concentrations measured with the particle sensor device 100 as previously explained. It is moreover reiterated that it will be straightforward to the skilled person to express the above equations in a different form, e.g. depending on the design of the particle sensor device, such that the embodiments of the present invention should not be limited to the above equations, which are given by way of non-limiting example only.

In operation 211, the processor 130 may process the first signal from the particle sensor 120 generated during the first measurement to obtain the first particle count $N_1$ and process the further signal from the particle sensor 120 generated during the second measurement to obtain the particle count $N_2$. The processor 130 may further obtain $T_1$ and $T_2$ in any suitable manner, e.g. by a timer or the like or alternatively $T_1$ and $T_2$ may have fixed values in case the particle sensor 120 is configured to perform a measurement for such a fixed period of time. As previously explained, the processor 130 may derive Vs from a signal provided by the inertia sensor 160 or alternatively Vs may be a constant, i.e. have a predefined value corresponding to a predefined shaking motion of the particle sensor device 100 in case of the absence of such an inertia sensor 160. The processor 130 may then use the determined values of $N_1$, $N_2$, $T_1$, $T_2$ and $V_s$ to determine the ambient particle concentration in the ambient environment using formula (3) above, thereby preferably eliminating the wind-induced contribution to the particle count $N_2$ as obtained by shaking the particle sensor device 100 as described above.

As a refinement to this method 200, the processor 130 may be adapted to only eliminate the wind-induced contribution to the further particle count if the wind speed $V_w$ exceeds a defined threshold. This for example may be based on the particle count $N_1$ obtained with particle sensor 120 during the first measurement in which the particle sensor device 100 is kept stationary. Although this particle count is a function of the actual ambient particle concentration, it has been found that at low enough wind speeds, the particle count $N_1$ will not exceed certain thresholds even for high ambient particle concentrations. Therefore, the processor 130 may be adapted to evaluate the particle count $N_1$ as obtained during the first measurement and only determine the ambient particle concentration PM with formula (3) if the particle count $N_1$ exceeds a defined threshold.

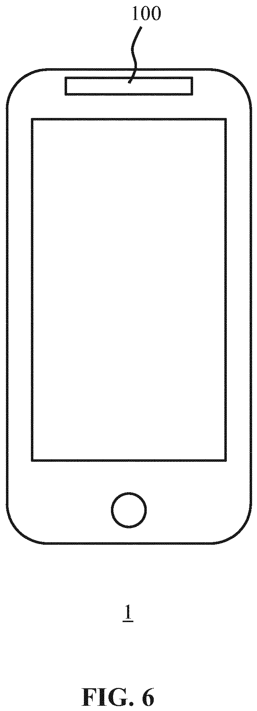

The particle sensor device 100 may form part of an electronic device 1, as is schematically depicted in Fig. 6. Such an electronic device 1 typically is a portable electronic device to facilitate the shaking of the particle sensor device 100 as explained above. Such a portable electronic device 1 for example may be a mobile phone such as a smart phone, a tablet computer, a personal digital assistant, a wearable smart electronic device such as a smart watch, and so on. In this embodiment, at least some elements of the particle sensor device 100 such as the processor 130, the output device 150 and the user interface 170 may be multifunctional components of the electronic device 1.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A particle sensor device (100) for determining an ambient particle concentration in an air flow through the particle sensor device, the particle sensor device comprising:

   an air flow channel (110) extending between a first opening (111) open to an ambient environment including the ambient particle concentration and a second opening (113) open to said ambient environment, the air flow channel comprising a sensing area (115) including a particle sensor (120); and
   a processor (130) coupled to the particle sensor and configured to derive the ambient particle concentration from:

   a first signal received from the particle sensor, said first signal being indicative of a first particle count in a wind-induced air flow through the air flow channel when the particle sensor device is stationary; and
   a further signal received from the particle sensor, said at least one further signal being indicative of a further particle count in an air flow through the air flow channel induced by a shaking motion of the particle sensor device.

2. The particle sensor device (100) of claim 1, wherein the processor (130) is configured to process the first signal and the further signal to eliminate a wind-induced contribution to the further particle count.

3. The particle sensor device (100) of claim 2, wherein the processor (130) is configured to derive a wind speed from the first signal and to eliminate the wind-induced contribution to the further particle count only if said derived wind speed exceeds a pre-defined threshold.

4. The particle sensor device (100) of claim 1, wherein the particle sensor (120) comprises an optical module (121) for emitting light through the sensing area and a detector (123) for detecting light scattered by particles in the air flow, and wherein the processor (130) is coupled to the detector.

5. The particle sensor device (100) of claim 1, further comprising an inertia sensor (160) for determining a speed of the particle sensor device induced by said shaking motion, wherein the processor (130) is configured to derive the ambient particle concentration from the first signal, the further signal and the determined speed.

6. The particle sensor device (100) of claim 1, wherein the shaking motion is a predefined motion, and wherein the processor (130) is configured to derive the ambient particle concentration from the first signal, the further signal and a predefined particle sensor device speed associated with said predefined shaking motion.

7. The particle sensor device (100) of claim 6, further comprising an output device (150) responsive to the processor (130), wherein the processor is adapted to provide user instructions on the output device for instructing a user to move the particle sensor device in accordance with the predefined movement.

8. The particle sensor device (100) of claim 1, wherein the particle sensor device is a wearable device.

9. An electronic device (1) comprising the particle sensor device (100) of claim

10. A method (200) of determining an ambient particle concentration with a particle sensor device (100) comprising:

   an air flow channel (110) extending between a first opening (111) open to an ambient environment and a second opening (113) open to the ambient environment, the air flow channel comprising a sensing area (115) including a particle sensor (120); and
   a processor (130) coupled to the particle sensor, the method comprising:

generating (203) a wind-induced air flow through the air flow channel with the particle sensor device in a stationary orientation;

generating (205) a first signal indicative of a first particle count in said wind-induced air flow with the particle sensor;

generating (207) a further air flow through the air flow channel by shaking the particle sensor device;

generating (209) at least one further signal indicative of a further particle count in said further air flow with the particle sensor; and

processing (211) the first signal and the further signal with the processor to determine the ambient particle concentration in the ambient environment.

11. The method (200) of claim 10, wherein processing (211) the first signal and the further signal with the processor (130) to determine the ambient particle concentration in the ambient environment comprises processing the first signal and the further signal to eliminate a wind-induced contribution to the further particle count.

12. The method (200) of claim 11, further comprising deriving a wind speed from the processed first signal and eliminating the wind-induced contribution to the further particle count only if said derived wind speed exceeds a pre-defined threshold.

13. The method (200) of claim 10, wherein:

generating (203) the wind-induced air flow through the air flow channel (110) with the particle sensor device (100) in a stationary orientation comprises positioning the air flow channel in a general direction (10) of the wind; and

generating (207) the further air flow through the air flow channel by shaking the particle sensor device comprises shaking the particle sensor device such that the air flow channel is oriented perpendicularly to said general direction during at least part of said shaking motion.

14. The method (200) of claim 10, wherein the particle sensor device (100) further comprises an inertia sensor (160) for determining a speed of the particle sensor device induced by said shaking motion, and wherein processing (211) the first signal and the further signal with the processor (130) to determine the ambient particle concentration comprises deriving the ambient particle concentration from the first signal, the further signal and the determined speed.

15. The method (200) of claim 10, wherein the shaking motion is a predefined motion, and wherein processing (211) the first signal and the further signal with the processor (130) to determine the ambient particle concentration comprises deriving the ambient particle concentration from the first signal, the further signal and a predefined particle sensor device speed associated with said predefined shaking motion.

FIG. 1

**FIG. 2**

(a)

(b)

**FIG. 3**

```
┌─────────────┐
│     201     │
└─────────────┘
       │
       ▼
┌─────────────┐
│     203     │
└─────────────┘
       │
       ▼
┌─────────────┐
│     205     │
└─────────────┘
       │
       ▼
┌─────────────┐
│     207     │
└─────────────┘
       │
       ▼
┌─────────────┐
│     209     │
└─────────────┘
       │
       ▼
┌─────────────┐
│     211     │
└─────────────┘
       │
       ▼
┌─────────────┐
│     213     │
└─────────────┘
```

200

FIG. 4

**FIG. 5**

100

1

**FIG. 6**

Europäisches
Patentamt

European
Patent Office

Office européen
des brevets

# EUROPEAN SEARCH REPORT

**Application Number**

EP 17 17 6931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2016/025628 A1 (KIM JONGSEOK [KR] ET AL) 28 January 2016 (2016-01-28) * the whole document * | 1-15 | INV. G01N15/14 |
| A | US 2008/278725 A1 (UNGER ROGER L [US]) 13 November 2008 (2008-11-13) * the whole document * | 1-15 | |
| A | WO 2017/017282 A1 (KONINKLIJKE PHILIPS NV [NL]) 2 February 2017 (2017-02-02) * the whole document * | 1-15 | |

**TECHNICAL FIELDS SEARCHED (IPC)**

G01N

The present search report has been drawn up for all claims

| Place of search | Date of completion of the search | Examiner |
|---|---|---|
| Munich | 11 December 2017 | Thomte, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 6931

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2017

| Patent document cited in search report | | | Publication date | Patent family member(s) | | | Publication date |
|---|---|---|---|---|---|---|---|
| US 2016025628 | A1 | | 28-01-2016 | KR | 20160012565 | A | 03-02-2016 |
| | | | | US | 2016025628 | A1 | 28-01-2016 |
| US 2008278725 | A1 | | 13-11-2008 | CN | 101715550 | A | 26-05-2010 |
| | | | | EP | 2145171 | A1 | 20-01-2010 |
| | | | | HK | 1144464 | A1 | 04-01-2013 |
| | | | | US | 2008278725 | A1 | 13-11-2008 |
| | | | | WO | 2008140816 | A1 | 20-11-2008 |
| WO 2017017282 | A1 | | 02-02-2017 | NONE | | | |

For more details about this annex : see Official Journal of the European Patent Office, No. 12/82

**EP 3 418 720 A1**

## REFERENCES CITED IN THE DESCRIPTION

### Patent documents cited in the description

- JP 2008145353 A
- CN 104089858 A
- CN 203551443 U
- CN 203824872 U
- CN 105021501 A
- US 20160025628 A1